# EUROPEAN PATENT APPLICATION

(11) **EP 3 441 210 A1**
(43) Date of publication of application: **13.02.2019**
(21) Application number: 18187004.9
(22) Date of filing: 02.08.2018
(51) Int. Cl.: B29C 45/14, B29C 33/14, B29D 35/12, B29D 35/00

(54) **MOLD FOR MOLDING FOOTWEAR BOTTOMS PROVIDED WITH A WELT**

(30) Priority: 09.08.2017 IT 201700092516
(71) Applicant: Eba Stampi SNC Di Pignotti E. Pignotti A. & Carpineti B., 62010 Montecosaro (MC) (IT)
(72) Inventor: PIGNOTTI, Emanuele, 62012 Civitanova Marche (MC) (IT); PIGNOTTI, Andrea, 62012 Civitanova Marche (MC) (IT); CARPINETI, Benedetto, 62010 Montecosaro (MC) (IT)
(74) Representative: Baldi, Claudio

(57) **Abstract**

Mold for molding footwear bottoms provided with a welt (3), comprising a die (10) provided with at least one cavity (11), a lid (20) provided with at least one piston (21) suitably shaped and dimensioned in order to be exactly matched by means of male-female coupling mode with said cavity (11) of the die (10), leaving an empty molding chamber (50), defined by a wall (21a) of said piston (21); the wall (21a) of the mold comprises holding means to firmly hold the welt (3) bent along a trajectory that perfectly follows the perimeter of said wall (21a); the holding means comprise a dense spaced series of teeth (22) disposed along the perimeter edge of said wall (21a) of the piston.

## Description

The present patent application for industrial invention relates to a mold used for molding footwear bottoms provided with a welt.

First of all, it must be noted that in the field of footwear manufacturing the term "welt" refers to a strip that is disposed between the sole and the upper with reinforcement and decorative function.

Generally, it is a strip of soft leather that is suitably machined and provided with regularly spaced small notches that correspond to the stitches.

Such a strip is used to cover the perimeter junction line where the lower ends of the upper are fixed to the sole.

In crafted shoes with a leather sole, the welt is sewn by hand with a delicate, complicated operation.

Nowadays, the majority of shoes is provided with bottoms obtained from molding synthetic materials, such as polyurethane, thermoplastic rubber, or PVC. When compared to traditional leather soles, the peculiarities of such synthetic materials mainly consist in their low cost and low specific weight, which allow for producing lightweight and inexpensive shoes.

An additional advantage of these materials is the fact that the bottoms can have any shape and very different surface finishes, thus favoring the creative inspiration of fashion designers.

In case of molded bottoms, the application of the welt does not require a specific stitching or gluing operation. In order to reduce production costs as much as possible, the welt is pre-loaded in the mold before injecting the molding material so that a finished bottom is obtained at the end of the molding process, that is to say a bottom provided with a perimeter strip with reinforcement and finishing function.

When this type of molding is used, which provides for pre-loading the welt inside the mold, a common drawback consists in the difficulties encountered in keeping the welt in a planar position along an annular trajectory that extends and develops on a plane.

Such a difficulty becomes a real problem in the sections where the welt needs to be folded with small curvature angles, like for example in the heel or, even worse, in the point of the shoe.

Such a problem becomes insuperable in the case of low-thickness welts, which are characterized by a very strong elastic return that tends to restore their natural position, which is merely rectilinear.

In fact, the lower the radius of curvature, the stronger is the tendency of the welt to bend. Therefore, the operator in charge of pre-loading the welt must patiently and skillfully position the welt in such a way to prevent the creation of said bends that would impair the perfect finishing of the bottom extracted from the mold.

D1 discloses a footwear sole and tools for manufacturing such a sole by means of an injection or compression process inside a last.

The primary purpose of the present invention is to remedy the aforementioned drawback by providing a mold in which the welt can be easily and rapidly loaded and maintained in the correct position throughout the injection process of the molding material, without the risk of losing such correct position under the thrust of the pressurized molding material that flows inside the mold.

The mold of the invention is defined by claim 1.

For the sake of clarity, the description of the mold according to the invention continues with reference to the attached drawings, which have a merely illustrative, not limiting value, wherein:
- Figs. 1 and 2 are perspective views of the lower side and of the upper side of a molded bottom with welt;
- Fig. 3 is an axonometric view of the die and the lid of the mold of the invention in open condition;
- Fig. 4 is a view of the die and the lid of the mold of the invention in closed position before the injection of molding material, both being sectioned with the plane IV-IV of Fig. 3, said figure also showing the welt that is pre-loaded in the mold;
- Fig. 5 is a view of the die and the lid of the mold of the invention in closed position after the injection of molding material, both being sectioned with the plane IV-IV of Fig. 3, said figure also showing the welt that is pre-loaded in the mold;
- Fig. 6 is an enlarged view of Fig. 5;
- Fig. 7 is an enlarged view of a detail of the mold in closed position after the injection of molding material and sectioned with a different plane parallel to the plane IV-IV of Fig. 3;
- Fig. 8 is a view of a piece of welt.

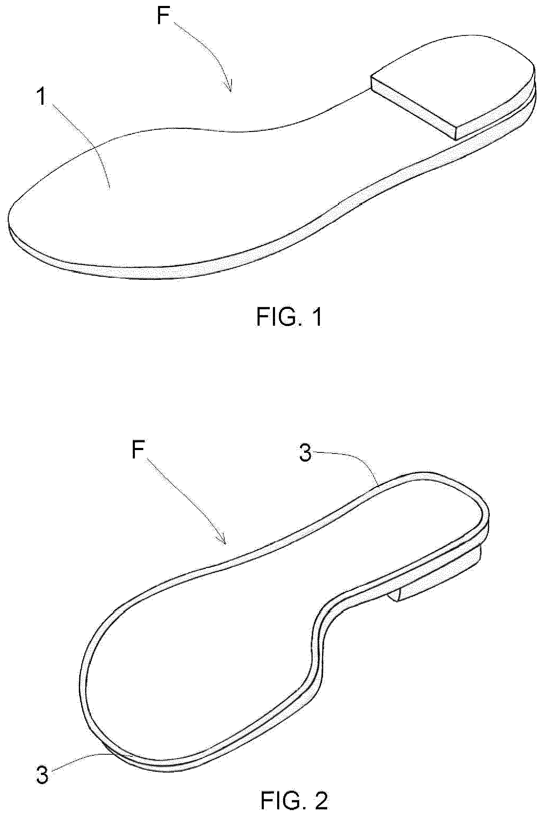

In order to avoid any possible misunderstanding, this description continues with the definitions of the terms that are used to indicate the different parts of the bottom to be molded, which is diagrammatically shown in Figs. 1 and 2, respectively seen from the bottom, i.e. from the side intended to come in contact with the lower side, and from above, i.e. from the side intended to be in contact with the foot.

In Figs. 1 and 2:
- the lower side of the bottom (F) is indicated with number (1) ;
- the upper side of the bottom (F) is indicated with number (2);
- the welt to be fixed onto the perimeter edge of the upper side (2) of the bottom (F) is indicated with number (3).

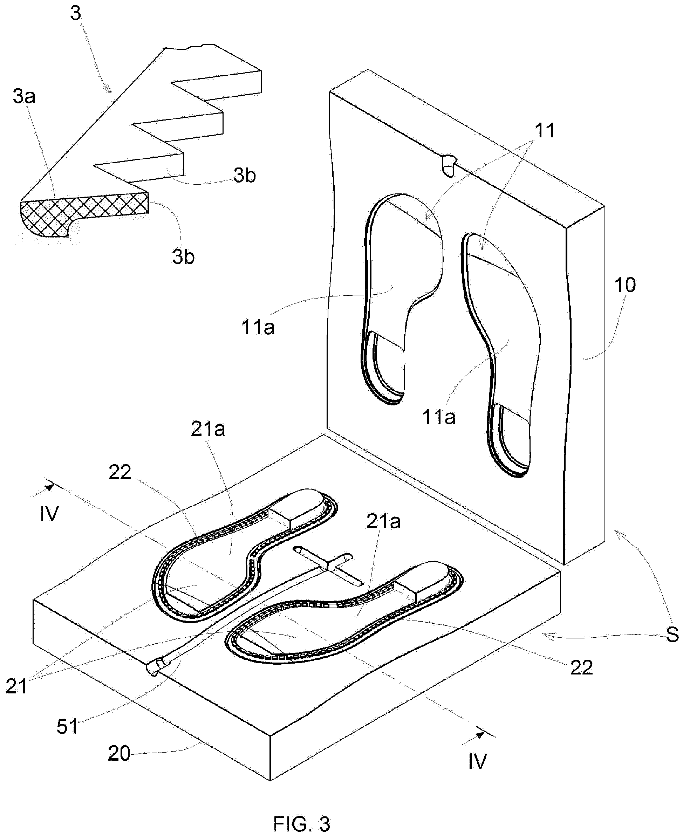

As shown in Fig. 3, the mold (S) of the invention traditionally comprises a die (10) and a lid (20).

The die (10) comprises at least one pair of specularly opposite, identical cavities (11), the bottom walls (11a) of which have a surface treatment that corresponds in negative mode to the pattern of the tread to be obtained on the lower side (1) of the bottom (F) to be molded;

The lid (20) comprises at least one pair of projecting bodies (21), technically defined as "pistons", which are identical and specularly opposite, as well as suitably shaped and dimensioned in order to be exactly matched in male-female coupling mode with said cavities (11) of the die (10), leaving an empty molding chamber (50), wherein the molding material is injected by means of injection channels (51) obtained in the lid (20).

The wall (21a) of said pistons (21), which is intended to be in contact with the bottom wall (11a) of the cavities (11) in order to define said molding chamber (50), has a surface treatment that corresponds in negative mode to the pattern to be obtained in correspondence of the upper side (2) of the bottom (F).

The innovative peculiarity of the mold of the invention consists in the fact that the wall (21a) of each piston (21) is provided with holding means to firmly hold the welt (3), which is bent along a trajectory that perfectly follows the perimeter of said wall (21a).

More precisely, said holding means comprise a dense spaced series of teeth (22).

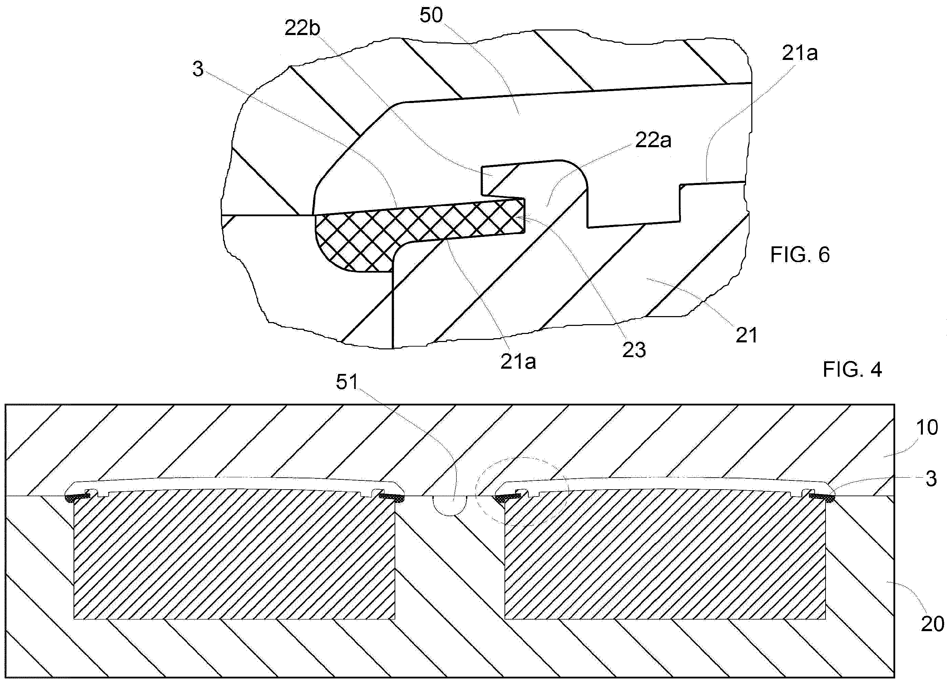

As shown in Fig. 6, the profile of each tooth (22) is shaped as an overturned "L", which comprises a vertical wing (22a) that protrudes from said wall (21a) of the piston (21) and ends on top with a transverse wing (22b) that faces the external perimeter of said wall (21a).

Because of the provision of the teeth (22), a niche (23) is formed in correspondence of each tooth (22), being defined by said transverse wing (22b) on top, by said wall (21a) on the bottom, and by said vertical wing (22a) on the back.

In other words, it can be said that the perimeter set of regularly spaced teeth (22) corresponds to a perimeter set of regularly spaced niches (23), with inlet facing the external perimeter of said wall (21a).

The set of regularly spaced niches (23) can be used as seats for the welt (3) in order to firmly hold the welt (3) in the correct position inside the mold (S) while the molding material is injected.

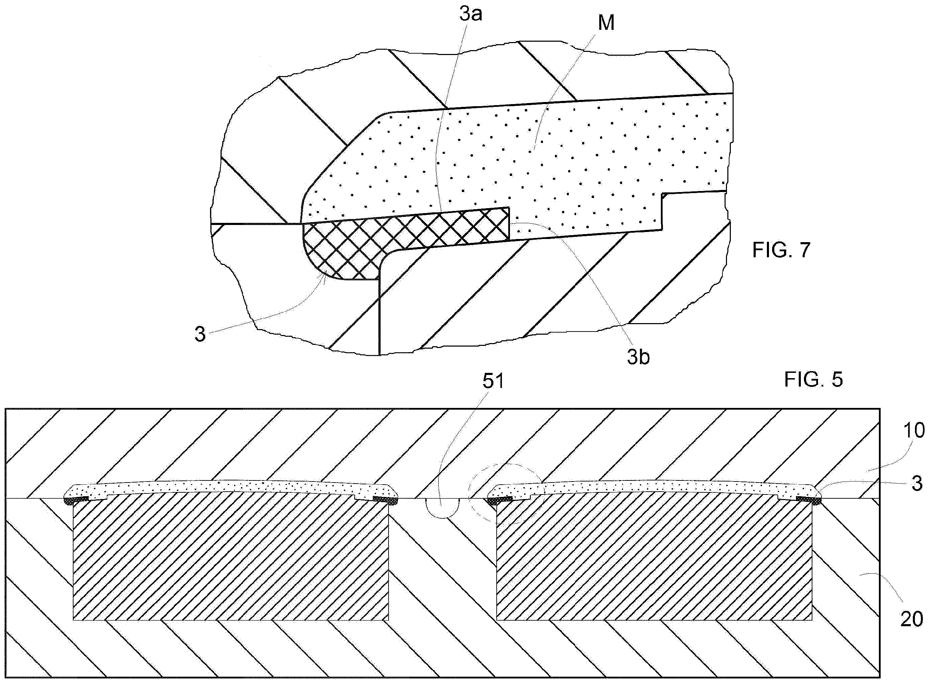

As shown in Fig. 4, the welt (3) is partially inserted and held inside said niches (23); in said figure, number (50) indicates the molding chamber defined by said lid (20) and said die (10), where the molding material (M) is injected, as shown in Figs. 5 and 7.

Fig. 7 is a sectional view of the mold in closed position, which is substantially identical to Fig. 6, the only difference being the fact that the transverse sectional plane of Fig. 6 passes through a tooth (22), whereas the transverse sectional plane of Fig. 7 passes through the empty space that separates a pair of adjacent teeth (22).

With reference to the sectional view of Fig. 7, it must be noted that the molding material (M) comes in contact with the welt (3) in two surfaces of the welt, namely:
- the surface (3a) of the welt (3) that coincides with the side of the welt (3) intended to be positioned and fixed on the perimeter edge of the upper side (2) of the bottom (F)
- the surface (3b) of the welt (3) that coincides with the internal side of the welt (3), i.e. the side facing the center of the upper side (2) of the bottom (F).

When the welt (3) is held inside the niches (23), the molding material (M) can be in contact with the welt (3) only in said surface (3a) of the welt (3) and not in the other surface (3b) of the welt (3) because the surface (3b) is engaged against the vertical wing (22a) of a tooth (22), as shown in Fig. 6.

Although in this description reference is made to a mold that comprises at least one pair of cavities for the simultaneous molding of one pair of bottoms, a right bottom and a left bottom, evidently the advantages of the invention will remain unchanged in case of a mold with only one cavity suitable for molding only the right bottom or the left bottom.

Likewise, it is evident that the fact whether the set of teeth (22) is regularly or irregularly spaced, and the fact whether the teeth (22) are obtained on the wall (21a) in one piece with said wall (21a) are completely irrelevant.

## Claims

**1.** Mold for molding footwear bottoms provided with a welt, comprising:
- a die (10) provided with at least one cavity (11), the bottom wall (11a) of which has a surface treatment that corresponds in negative mode to the pattern of the tread to be obtained on the lower side (1) of the bottom (F) to be molded;
- a lid (20) provided with at least one piston (21) suitably shaped and dimensioned in order to be exactly matched by means of male-female coupling mode with said cavity (11) of the die (10), leaving an empty molding chamber (50), wherein the molding material is to be injected by means of injection channels (51); the wall (21a) of said piston (21) that defines said molding chamber (50) has a surface treatment that corresponds in negative mode to the pattern to be obtained in correspondence of the upper side (2) of the bottom (F) to be molded;
- holding means disposed on said wall (21a) of the piston to firmly hold a welt (3) bent along a trajectory that perfectly follows the perimeter of said wall (21a);
**characterized in that** said holding means comprise a dense spaced series of teeth (22) disposed along the perimeter edge of said wall (21a) of the piston.

**3.** The mold of claim 1, wherein the profile of each tooth (22) is shaped as an overturned "L", which comprises a vertical wing (22a) that protrudes from said wall (21a) of the piston (21) and ends on top with a transverse wing (22b) that faces the external perimeter of said wall (21a), in such a way that a niche (23) is formed in correspondence of each tooth (22), being defined by said transverse wing (22b) on top, by said wall (21a) on the bottom, and by said vertical wing (22a) on the back.
